# EUROPEAN PATENT APPLICATION

(11) **EP 2 525 297 A1**
(43) Date of publication of application: **21.11.2012**
(21) Application number: 11166171.6
(22) Date of filing: 16.05.2011
(51) Int. Cl.: G06F 21/00, G06F 17/30

(54) **Method for enhancing security in a tag-based interaction**

(71) Applicant: NTT DOCOMO, INC., Chiyoda-ku Tokyo (JP)
(72) Inventor: Holleis, Paul, 81929 Munich (DE); Broll, Gregor, 85579 Neubiberg (DE); Schaefer, Christian, 81371 Munich (DE); Lachmund, Sven, 80687 Munich (DE)
(74) Representative: Betten & Resch

(57) **Abstract**

A method for enhancing security in a tag-based interaction between a mobile device and a tagged object which corresponds to a service offered by an application service provider, wherein said tagged object comprises one or more tags which contain tag information to be read by said mobile device, wherein said read tag information is at least partly to be used as an input to an application service running on said mobile device and offered by said application service provider, said method comprising: Reading by said mobile device identification information from said tagged object which identifies said tagged object,
forwarding said identification information to a security server, said security server comprising a database where application service providers have registered their application services together with their corresponding tagged objects and the identification information identifying said tagged objects, wherein
said database of said security server has stored for each tagged object and its corresponding application service a set of rules which specify what actions and/or

which content of the one or more tags are allowed for this tagged object when executing its corresponding application service, said method further comprising:
based on said identification information, identifying the tagged object and its corresponding set of rules;
reading tag information contained in said one or more tags;
before using said read tag information as an input to said application service,
performing a validity check by checking whether said read data matches with said set of rules corresponding to said tagged object to determine whether said tag information corresponds to a valid interaction when executing said application service;
using said tag information as an input to said application service only if said validity check confirms that said tag information is valid.

## Description

### FIELD OF INVENTION

The present invention relates to a method for enhancing security in tag-based interaction, in particular to the interaction between mobile devices and tag-based interfaces.

### BACKGROUND OF THE INVENTION PROBLEM

People are often interested in retrieving additional information about objects at hand. Markers and tags such as QR codes and NFC tags are widely used to provide the user with a quick link to such additional information. Apart from information retrieval, objects (e.g. posters, advertising columns) can also be associated with digital services and can provide multiple tags for their invocation. Users can touch the different tags to interact with the associated service, e.g. to buy movie- or transportation-tickets. However, unlike written information, users cannot beforehand see what data is stored on such tags. Therefore, it is easily possible for unauthorised persons to change this data without a user being able to detect it. In this way, the user can be led to completely unrelated and potentially dangerous services or internet locations. In particular, the following problems arise:
- Users can be tricked into using services or browsing to internet pages that were unintended by the provider
- Providers can be discredited by linking to unintended services or internet pages
- Providers can lose revenue if tags link to services, products, or internet pages of a competitor instead of the original provider

Possible attacks on tagged objects include:
- changing the content of the tags
- replacing tags
- duplicating tags
- reordering tags
- changing the look of the object on top of the tags
- placing tags from one object to another object
- creating a new object with new tags

This means that for interaction with tags there is a security risk for which so far there exists no solution.

Research on security in tag-based interfaces so far has focused on the channel between the tag and the reader device, i.e. whether and which attacks can successfully disturb, read, or change the transfer of data between tag and reader. However, this needs active devices in the vicinity of the interface and some effort. A summary on NFC-related security, possible attacks, and solution can e.g. be found in Ernst Haselsteiner, Klemens Breitfufβ: Security in near field communication (NFC), Philips Semiconductors, Printed handout of Workshop on RFID Security RFIDSec 06, July 2006.

However, it is much easier to tamper with the tags and their content offline. For such a security risk there exists no solution.

### SUMMARY OF THE INVENTION

According to one embodiment there is provided a method for enhancing security in a tag-based interaction between a mobile device and a tagged object which corresponds to a service offered by an application service provider, wherein said tagged object comprises one or more tags which contain tag information to be read by said mobile device, wherein said read tag information is at least partly to be used as an input to an application service running on said mobile device and offered by said application service provider, said method comprising:
Reading by said mobile device identification information from said tagged object which identifies said tagged object,
forwarding said identification information to a security server, said security server comprising a database where application service providers have registered their application services together with their corresponding tagged objects and the identification information identifying said tagged objects, wherein
said database of security server has stored for each tagged object and its corresponding application service a set of rules which specify what actions and/or which content of the one or more tags are allowed for this tagged object when executing its corresponding application service, said method further comprising: based on said identification information, identifying the tagged object and its corresponding set of rules;
reading tag information contained in said one or more tags;
before using said read tag information as an input to said application service, performing a validity check by checking whether said read data matches with said set of rules corresponding to said tagged object to determine whether said tag information corresponds to a valid interaction when executing said application service has been tampered or modified;
using said tag information as an input to said application service only if said validity check confirms that said tag information is valid.

By registering the service together with identification information and a set of rules the execution of a validity check of a tag interaction can be performed by checking whether tag data which has been read matches with the set of rules corresponding to the tagged object and its service. In this manner it can be checked whether the tag data has been modified or tampered with so that only unmodified or untampered tag data are allowed as an input to the application service. In this way the security of the tag-based interaction can be improved.

According to one embodiment said identification information comprises an image of said tagged object or a part thereof captured by said mobile device, or said identification information comprises information read from a start tag.

Using an image of the tagged object or a part thereof is a particularly easy implementation of "identification information". Alternatively information read from a start tag may be used which requires the transmission of a smaller amount of data.

According to one embodiment said identification information is stored in said tagged object as a watermark.

This is a particularly secure implementation of the identification information.

According to one embodiment the method comprises: Checking whether said image of said tagged object or said part thereof which has been forwarded to said security server with the corresponding pre-registered image in said database to check whether the visual appearance has been tampered.

In this way it can be detected whether there has been an attack by modifying or tampering the visual appearance of the tagged object. If such an attack is detected the execution of the service may be aborted to prevent the attack.

According to one embodiment the method comprises: Comparing said tag information which has been read or information which has been derived therefrom with pre-registered information from said application service provider which corresponds to the untampered and unmodified tag information which is stored in said database;
if said comparison results in that said pre-registered information matches with said tag information which has been read or information which has been derived therefrom, using said read tag information as an input to said application service.
In this manner an attack which is based on a modification of a tag to be used as an input to the application service can be prevented.

According to one embodiment said tag information which is read by said mobile device comprises one or more of the following:
A picture captured by said mobile device;
a visual marker such as a QR code;
information stored on a RFID tag or a NFC tag;
a visual marker such as a barcode.

These are particularly suitable implementations of tag information.

According to one embodiment said set of rules comprises one or more of the following: A set of one or more host addresses to which the tag information read from said one or more tags is allowed to link to;
a list of content which is allowed to be on said one or more tags;
a state diagram or a flowchart or a workflow description representing all allowed permutations of actions.

By including a set of links into the set of rules it can be ensured that the user is not led to a faked link by an attacker.

By including the list of content of tags it can be ensured that the input to the service as read from a tag is not faked.

Finally, by providing a state diagram or a flowchart or a workflow description representing all allowed permutations of actions such attacks which are based on a reordering of the tags (changing the flow of the service as expected/defined by the service provider) can be prevented.

According to one embodiment said validity check comprises:
Comparing the data read by said mobile device with set of one or more host addresses, or said list of content which is allowed to be on said one or more tags or
said state diagram or flowchart or workflow description, and
using only information which as a result of said comparison has been found to be valid as an input to said application service.

In this manner the content of a read tag can be checked against the set of rules to allow only the usage of valid tag contents.

According to one embodiment the method comprises:
sending said read tag information from said mobile device via a network connection to a validation server;
performing said validity check on said validation server;
returning the result of said validity check to said mobile device; and
depending on the result of said validity check, deciding by said mobile device whether and to what extent said tag information is to be used as an input to said application.

In this manner the set of rules needs not to be downloaded to the mobile device but is kept on the validation server where the validity check then is performed. In one embodiment the validation server may be implemented by the same device as the security server mentioned earlier.

According to one embodiment the method comprises:
Forwarding all or a part of said set of rules from said security server to said mobile device, and
performing at least a part of said validity check on said mobile device based on said forwarded set of rules.

In this manner the validity check can be performed on the mobile device.

According to one embodiment said tag information is encrypted and said validity check comprises decrypting said tag information.

In this manner the security of the approach can be further enhanced. The key for decryption may be sent to the decrypting device via a separate channel. It may e.g. be sent to the mobile device from the security server once the validity check has been performed by the security server. Alternatively, the decryption may be performed on the security server. The decrypted tag information may then be sent back to the mobile device.

According to one embodiment there is provided a mobile device for enhancing security in a tag-based interaction between said mobile device and a tagged object which corresponds to a service offered by an application service provider, wherein said tagged object comprises one or more tags which contain tag information to be read by said mobile device, wherein said read tag information is at least partly to be used as an input to an application service running on said mobile device and offered by said application service provider, said mobile device comprising:
A module for reading by said mobile device identification information from said tagged object which identifies said tagged object,
A module for forwarding said identification information to a security server, said security server comprising a database where application service providers have registered their application services together with their corresponding tagged objects and the identification information identifying said tagged objects, wherein
said database of said security server has stored for each tagged object and its corresponding application service a set of rules which specify what actions and/or which content of the one or more tags are allowed for this tagged object when executing its corresponding application service, said security server based on said identification information, identifies the tagged object and its corresponding set of rules;
a module for reading tag information contained in said one or more tags;
a module for before using said read tag information as an input to said application service, performing a validity check by checking whether said read data matches with said set of rules corresponding to said tagged object to determine whether said tag information corresponds to a valid interaction when executing said application service; a module for using said tag information as an input to said application service only if said validity check confirms that said tag information is valid.

In this manner a mobile device according to an embodiment of the invention can be implemented.

According to one embodiment there is provided a security server for enhancing security in a tag-based interaction between a mobile device and a tagged object which corresponds to a service offered by an application service provider, wherein said tagged object comprises one or more tags which contain tag information to be read by said mobile device, wherein said read tag information is at least partly to be used as an input to an application service running on said mobile device and offered by said application service provider, said security server comprising:
A module for receiving identification information from said mobile device which has been read by said mobile device from said tagged object and which identifies said tagged object,
a database where application service providers have registered their application services together with their corresponding tagged objects and the identification information identifying said tagged objects, wherein
said database of said security server has stored for each tagged object and its corresponding application service a set of rules which specify what actions and/or which content of the one or more tags are allowed for this tagged object when executing its corresponding application service,
a module for identifying said tagged object and its corresponding set of rules based on said identification information;
a module for enabling a validity check for read data which has been read by said mobile device from a tag by checking whether said read data matches with said set of rules corresponding to said tagged object to determine whether said tag information corresponds to a valid interaction when executing said application service before said read tag information is used as an input to said application service.

In this manner a security server according to an embodiment of the invention can be implemented.

According to one embodiment the mobile device or the server further comprise:
A module to perform a method as defined in one of the embodiments of the invention.

In this manner an apparatus according to further embodiments of the invention may be implemented.

According to one embodiment there is provided a computer program comprising computer program code which when being executed on a computer enables said computer to perform a method according to one of the embodiments of the invention or to act as an apparatus according to one of the embodiments of the invention.

### DESCRIPTION OF THE DRAWINGS

Fig. 1 illustrates a system according to an embodiment of the invention.
Fig. 2 illustrates a system according to a further embodiment of the invention.

### DETAILED DESCRIPTION

There will now be described embodiments which increase security and trust of tag-based interactions, e.g. while interacting using the mobile *device with* tagged objects. Such tagged objects can for example be posters, newspaper articles, consumer products, etc. The tags used to make these objects interactive can come in various forms, e.g. visual markers such as QR codes or RF-based tags such as NFC.

According to one embodiment the approach *comprises the following:*
- a user sends information about the tagged object (e.g. a picture of the object, potentially processed such as reading a watermark) to a dedicated server using a secure connection with a dedicated mobile device application.
- As providers of tagged objects have registered their tagged objects on the dedicated server; the dedicated server can then check the validity of data read from tags (or can send information to the mobile device so that it can check itself). The dedicated server which performs the validity check is hereinafter also referred to as "security server".

In one embodiment, users take a picture of the tagged-object with which they want to interact using a dedicated mobile device application. The application sends the image to a security server using a secure connection. On the security server, interface providers or service providers have registered their tagged interfaces (i.e. submitted a picture of the tagged object and a set of rules specifying what interactions / content is allowed for this object). Upon receipt of the picture from the user, the security server checks whether the object is in its database. It can potentially also check for visible modifications to the object.

If the object has been registered, the mobile device is notified. The security server also sends a 'workflow description' to the phone, i.e. a list of tag contents / actions that are allowed. The phone can then check against these rules each time the user interacts with a tag.

This approach using such a setup has several advantages with respect to existing systems that are shown below.
- The proposed setup can avoid that the
   - user interacts with a non-registered tagged object
   - user is using a new or different service / is directed to a different web-page other than intended by the object provider
      - because tag content has been changed
      - because a tag has been replaced / pasted over
      - because a tag (with not registered content) has been added
   - user is using a different service / directed to a different web-page than expected
      - because a (valid) tag from an object is used with a different object
      - because the dedicated start-tag has been tampered with or removed
- The proposed setup can enhance detection and thus help to avoid that the
   - user is using a different service / is directed to a different web-page than expected
      - because considerable parts of the object have been changed, replaced, or pasted over (in case of embodiments D2b or D3)
      - because a duplicate of a valid tag has been added or tags have been rearranged (in case of the use of visual tags; or depending on the workflow description)

Although it cannot be avoided that the user cannot use a service because the dedicated start-tag has been tampered with or removed, the tagged object is not registered at the security server, the visual appearance is changed or replaced or the embedded watermark is changed or removed, the user is shielded from any harm as these attacks will be detected and any further service invocation refused.

In the following further embodiments will be described in somewhat more detail.

According to one embodiment which may be used in several variations, the user sends some information about the tagged object which is identification information to identify the tagged object to a dedicated serve. This identification information then can be used to check subsequent interactions with this tagged object.

In a relatively simple embodiment, an ID (the identification information) is securely stored in a tag given by the provider of the tagged object or of the space where the tagged-object is located. As an example, the provider of an advertisement space may put a read-only NFC tag in a tamper-proof box next to a tag-based poster.

Alternatively, the ID may be stored in the object as a watermark. To implement such an approach existing technologies which incorporate a watermark into an image and identify it then from the captured image may be used. Regarding this approach reference is made for example to the NTT CyberSquash technology (see e.g. http://www.ntt.co.ip/news/news03e/0307/030707.html) which is used to detect a watermark in an image to thereby identify a link.

In this embodiment two approaches may be distinguished. In a first approach the watermark is detected directly on the phone, and in a second approach the watermark is detected on the security server. The main between the two approaches is that in the second approach the whole picture will need to be transferred to the security server which is not necessary in the first approach.

In another embodiment, the user takes a picture of the whole tagged object or a part thereof. This is then transferred to the security server which can compare it to its database of pre-registered tagged objects and images thereof. For a concrete implementation of such an image comparison reference is made e.g. to "Detection of non-identical duplicate consumer photographs". A. Jaimes, S.-F. Chang, and A. C. Loui. In ACM Multimedia, 2003.

Such an approach has the advantage that tampering with the visual appearance is likely to be detectable. Furthermore, performing the detection of embedded watermarks and the comparison of pictures on the security server also requires less computing power on mobile devices.

These approaches can be followed by an additional user confirmation. For that purpose e.g. the security server may send an image of the tagged object as stored in its database. Users can then compare whether this tagged object is truly the interface they are currently interacting with. Alternatively to such an explicit confirmation, the security server can send implicit confirmations of a poster's identity to the mobile device, e.g. a user interface design that matches the (corporate) design of the poster. Based thereon the user may then confirm that he is interacting with the correct interface which he intends to interact with.

Once the identity of the tagged poster has been detected (and possibly after it has been confirmed by the user) the approach proceeds with the checking whether a tag-based interaction is valid (which means that it may be allowed to be executed) or whether it is invalid (which means then that its execution should be prevented).

The purpose of the validity check is to detect whether the interaction is actually valid or whether it possibly is the result of a tagged object which has been tampered so that the interaction would trigger a result which actually is neither intended by the service provided nor by the user.

For the purpose of detecting invalid interactions, according to one embodiment the provider of the tagged-object is responsible to provide a set of rules which specify what actions and/or which content of the one or more tags of a tagged object are allowed when executing the service which corresponds to the tagged object. The set of rules may e.g. specify a workflow description to the security server. This may e.g. contain information about which tag contents / services / interactions with tags are allowed to the mobile device. These rules to specify allowed actions / contents can be described in many forms. A relatively simple one is to specify the host address / addresses that the tags are allowed to link to. More restricted approaches would be an explicit list of content that is allowed to be on the tags which may e.g. be checked using string-matching.

These or similar approaches do not avoid possible attacks by reordering tags. To counter such a re-ordering of the tags, the providers can in one embodiment submit a serialisation of a complete state diagram or flow chart representing all allowed permutations of actions. Any interaction carried out by the user may then be checked against this serialization of the state diagram or flow chart to identify whether it is indeed an allowable (i.e. "valid") interaction or whether it is not allowable (i.e. "invalid") in connection with the service to be executed.

In one embodiment the security server sends the set of rules or the workflow description to the phone. The mobile device can then compare the actual data read with the rules to execute an appropriate action. If the data read from the tags on the poster are valid according to the workflow description on the phone, the phone can use the information from the valid tags to interact with services that have been associated with the poster by the provider of the poster and the tags.

In another embodiment the security server does not provide this information to the mobile device. In this embodiment every subsequent interaction with the tags (i.e. the read contents) is transmitted to the security server which then does the validity check. In this embodiment, it is the security server that handles the communication with any 3^{rd} party services, not the mobile phone as in the previous embodiment.

Any mixture of these two embodiments is also possible. In one such mixed approach, e.g. a list of host addresses is sent to the phone but the workflow as such is checked against a more detailed description during the interaction with the security server.

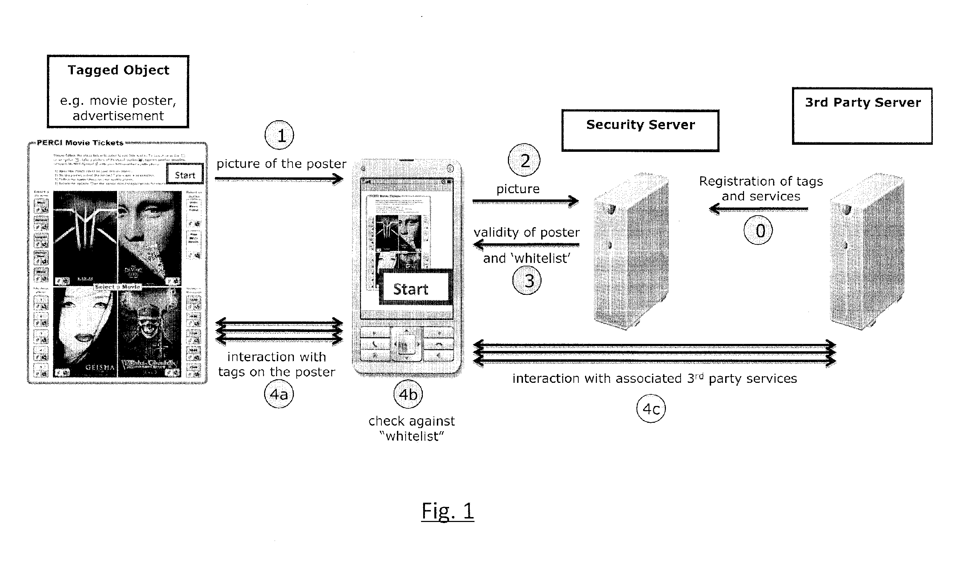

Fig. 1 illustrates an overview of a system which operates in accordance with an embodiment of the invention. It illustrates the involved parties/elements and the data that is transferred.

The tagged object which may be a poster having NFC tags or QR codes or something alike is shown on the left-hand side of Fig. 1. The tags may comprise such information as hyperlinks to service providers offering a certain service, and/or they may contain information which identifies a selection made by a user during interaction with a service, e.g. by choosing a certain tag and moving the NFC reader of his device close to the tag.

The poster corresponds to a certain service provider which offers a certain service for which the poster is the "user interface". Such a service provider may have a server (in fig. 1 labelled 3^{rd} party server) with which an interaction may be required for executing the service on the mobile phone via tag-based interactions.

In an initial step the service provider registers with a security server by registering the tags and services of the service provider in connection with a certain tagged object (step 0 in Fig. 1). The security server has a database with the registered services, their corresponding tagged objects, the identification information of the tagged objects, and a set of rules for the service defining valid interactions.

Then the user interaction with the tagged object may start in step 1. For that purpose the user may "read" identification information from the poster which identifies the poster, e.g. by taking a picture of the tagged object (the poster) with his mobile device or by reading the contents of a start tag (which may be a NFC tag or a QR code or any other tag). Then in step 2 the identification information (the picture or poster ID) is sent to the security server from the mobile device. In the security server then there is performed a validity check to identify whether the identification information corresponds to a registered service by looking up the database and trying to match the ID information with the one of registered posters/services. If a valid service is found, then for this service there is stored in the database of the security server a set of rules which may be regarded as "whitelist" which defines allowed or "valid" interactions between the tagged object and the service/the mobile device.

Such information (the "whitelist") is then sent back from the security server to the mobile device in step 3 together with information that the poster is "valid".

Then the actual interaction with the service may start by performing tag-based interactions between the mobile device and the poster in step 4a. Each interaction is then in step 4b against the set of rules or whitelist which may take the form of "workflow description" which defines the allowable or valid content of read tags, their allowed order, etcetera.

Based on the validity check in the mobile phone the mobile device may then interact with the 3^{rd} party service by connecting to the server of the 3^{rd} party service to execute the service ion step 4c.

The step 4c is only allowed if the preceding interaction has been found valid in the validity check which in this embodiment is performed in the mobile device based on the whitelist which has been received from the security server.

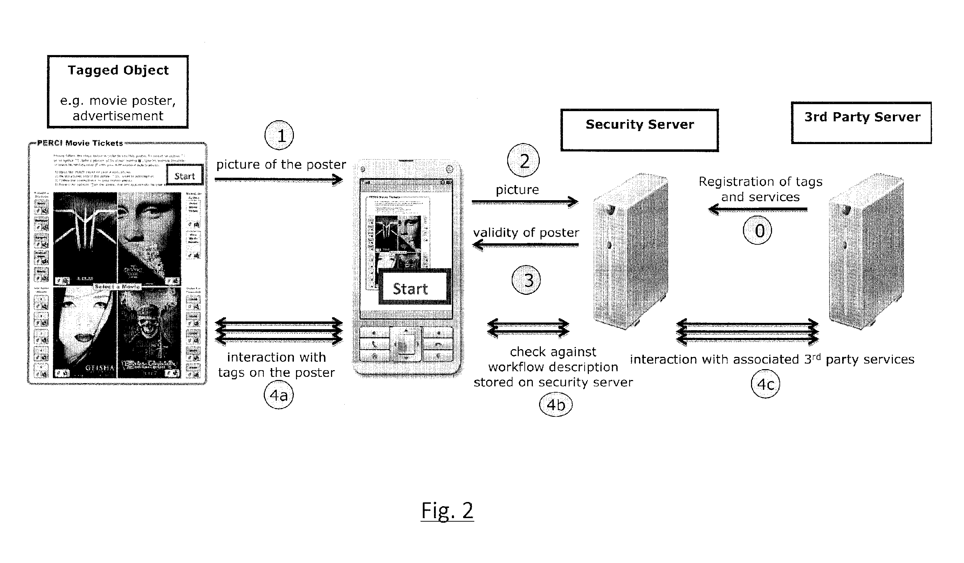

Fig. 2 illustrates a slightly modified approach. In this approach the "whitelist" is not sent from the security server to the mobile device but is kept on the security server, only information whether the tagged object is valid is sent in step 3. Therefore, rather than performing the validity check on the mobile device, in this embodiment the validity check of an interaction is performed on the security server (step 4b). Therefore, also the interaction with the 3^{rd} party services (step 4c) is in this embodiment carried out via the security server and not directly from the mobile device.

Apart from this modification the embodiment illustrated in Fig. 2 operates in a similar manner as the one illustrated in Fig. 1

With the proposed system and mechanism, several attacks can be mitigated or detected securely or at least the probability of detection is increased. Specifically, the method can avoid that the user is interacting with services not intended by the provider of the tagged object even if
- the user encounters a non-registered tagged object
- new content has been introduced by changing the contents of tags, replacing tags, adding new tags, or by changing the visible parts of a tagged object
- additional tags (with new content) have been added
- valid tags from valid tagged objects are moved to other objects
- the dedicated start-tag has been tampered with or removed

Using embodiments where an image of the tagged object is sent to the security server, unauthorized changes can be detected if e.g.
- parts of the object have been changed, replaced, or pasted over
- duplicates of valid tags have been added
- valid tags have been rearranged

Adding the requirement of a user confirmation can also avoid unintended effects if
- valid tags have been rearranged or
- very small changes in the visual appearance of the tagged objects have been made

It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a network entity such as a server, or a mobile device like a mobile phone, a smartphone, a PDA, a UE or anything alike.

## Claims

1. A method for enhancing security in a tag-based interaction between a mobile device and a tagged object which corresponds to a service offered by an application service provider, wherein said tagged object comprises one or more tags which contain tag information to be read by said mobile device, wherein said read tag information is at least partly to be used as an input to an application service running on said mobile device and offered by said application service provider, said method comprising:
Reading by said mobile device identification information from said tagged object which identifies said tagged object,
forwarding said identification information to a security server, said security server comprising a database where application service providers have registered their application services together with their corresponding tagged objects and the identification information identifying said tagged objects, wherein
said database of said security server has stored for each tagged object and its corresponding application service a set of rules which specify what actions and/or which content of the one or more tags are allowed for this tagged object when executing its corresponding application service, said method further comprising:
based on said identification information, identifying the tagged object and its corresponding set of rules;
reading tag information contained in said one or more tags;
before using said read tag information as an input to said application service, performing a validity check by checking whether said read data matches with said set of rules corresponding to said tagged object to determine whether said tag information corresponds to a valid interaction when executing said application service;
using said tag information as an input to said application service only if said validity check confirms that said tag information is valid.

2. The method of claim 1, wherein
said identification information comprises an image of said tagged object or a part thereof captured by said mobile device, or
said identification information comprises information read from a start tag.

3. The method of claim 1 or 2, wherein
Said identification information is stored in said tagged object as a watermark.

4. The method of one of claims 2 or 3, further comprising:
Checking whether said image of said tagged object or said part thereof which has been forwarded to said security server with the corresponding pre-registered image in said database to check whether the visual appearance has been tampered.

5. The method of one of claims 1 to 4, wherein said validity check comprises:
Comparing said tag information which has been read or information which has been derived therefrom with pre-registered information from said application service provider which corresponds to the untampered and unmodified tag information which is stored in said database;
if said comparison results in that said pre-registered information matches with said tag information which has been read or information which has been derived therefrom, using said read tag information as an input to said application service.

6. The method of one of the preceding claims, wherein said tag information which is read by said mobile device comprises one or more of the following:
A picture captured by said mobile device;
a visual marker such as a QR code;
information stored on a RFID tag or a NFC tag;
a visual marker such as a barcode.

7. The method of one of the preceding claims, wherein said set of rules comprises one or more of the following:
A set of one or more host addresses to which the tag information read from said one or more tags is allowed to link to;
a list of content which is allowed to be on said one or more tags;
a state diagram or a flowchart or a workflow description representing all allowed permutations of actions.

8. The method of claim 7, wherein said validity check comprises:
Comparing the data read by said mobile device with set of one or more host addresses, or said list of content which is allowed to be on said one or more tags or said state diagram or flowchart or workflow description, and
using only information which as a result of said comparison has been found to be valid as an input to said application service.

9. The method of one of the preceding claims, comprising:
sending said read tag information from said mobile device via a network connection to a validation server;
performing said validity check on said validation server;
returning the result of said validity check to said mobile device; and
depending on the result of said validity check, deciding by said mobile device whether and to what extent said tag information is to be used as an input to said application.

10. The method of one of claims 1 to 9, comprising:
Forwarding all or a part of said set of rules from said security server to said mobile device, and
performing at least a part of said validity check on said mobile device based on said forwarded set of rules.

11. The method of one of the preceding claims, wherein
said tag information is encrypted and said validity check comprises decrypting said tag information.

12. A mobile device for enhancing security in a tag-based interaction between said mobile device and a tagged object which corresponds to a service offered by an application service provider, wherein said tagged object comprises one or more tags which contain tag information to be read by said mobile device, wherein said read tag information is at least partly to be used as an input to an application service running on said mobile device and offered by said application service provider, said mobile device comprising:
A module for reading by said mobile device identification information from said tagged object which identifies said tagged object,
A module for forwarding said identification information to a security server, said security server comprising a database where application service providers have registered their application services together with their corresponding tagged objects and the identification information identifying said tagged objects, wherein
said database of said security server has stored for each tagged object and its corresponding application service a set of rules which specify what actions and/or which content of the one or more tags are allowed for this tagged object when executing its corresponding application service, said security server based on said identification information, identifies the tagged object and its corresponding set of rules;
a module for reading tag information contained in said one or more tags;
a module for before using said read tag information as an input to said application service, performing a validity check by checking whether said read data matches with said set of rules corresponding to said tagged object to determine whether said tag information corresponds to a valid interaction when executing said application service;
a module for using said tag information as an input to said application service only if said validity check confirms that said tag information is valid.

13. A security server for enhancing security in a tag-based interaction between a mobile device and a tagged object which corresponds to a service offered by an application service provider, wherein said tagged object comprises one or more tags which contain tag information to be read by said mobile device, wherein said read tag information is at least partly to be used as an input to an application service running on said mobile device and offered by said application service provider, said security server comprising:
A module for receiving identification information from said mobile device which has been read by said mobile device from said tagged object and which identifies said tagged object,
a database where application service providers have registered their application services together with their corresponding tagged objects and the identification information identifying said tagged objects, wherein
said database of said security server has stored for each tagged object and its corresponding application service a set of rules which specify what actions and/or which content of the one or more tags are allowed for this tagged object when executing its corresponding application service,
a module for identifying said tagged object and its corresponding set of rules based on said identification information;
a module for enabling a validity check for read data which has been read by said mobile device from a tag by checking whether said read data matches with said set of rules corresponding to said tagged object to determine whether said tag information corresponds to a valid interaction when executing said application service before said read tag information is used as an input to said application service.

14. The mobile device or the server according to one of claims 12 or 13, further comprising:
A module to perform a method as defined in one of claims 1 to 11.

15. A computer program comprising computer program code which when being executed on a computer enables said computer to perform a method according to one of claims 1 to 11 or to act as an apparatus as defined in one of claims 12 to 14.
